# EUROPÄISCHE PATENTSCHRIFT

(11) **EP 2 627 554 B1**
(45) Veröffentlichungstag und Bekanntmachung des Hinweises auf die Patenterteilung: **06.04.2016**
(21) Anmeldenummer: 11779091.5
(22) Anmeldetag: 14.10.2011
(51) Int. Cl.: B62K 3/00, B62K 11/00, B62K 15/00, B62K 17/00, B62M 7/12, B62K 5/05

(54) **DURCH GEWICHTSVERLAGERUNG STEUERBARES FAHRZEUG MIT ZWEIGETEILTEM FAHRBRETT**
VEHICLE WITH SPLIT DRIVING BOARD CONTROLLABLE BY WHEIGHT SHIFTING
VÉHICULE CONTRÔLABLE PAR DÉPLACEMENT DU POIDS AVEC PLANCHE DE CONDUITE DIVISÉE EN DEUX

(30) Priorität: 16.10.2010 DE 102010048729
(43) Veröffentlichungstag der Anmeldung: 21.08.2013
(73) Patentinhaber: Volkswagen Aktiengesellschaft, 38436 Wolfsburg (DE)
(72) Erfinder: ANDRONIS, Odysseus, 38302 Wolfenbüttel (DE); LENGFELD, Olaf, 38547 Calberlah (DE)
(86) Internationale Anmeldenummer: PCT/EP2011/005154
(87) Internationale Veröffentlichungsnummer: WO 2012/048882

(56) Entgegenhaltungen:
- WO-A1-2008/119250
- DE-A1- 10 209 093
- FR-A1- 2 937 613
- US-A- 4 941 670
- US-A1- 2004 216 938

## Beschreibung

Die vorliegende Erfindung betrifft ein Fahrzeug mit einem Fahrbrett zum Abstellen wenigstens der Füße des Fahrers des Fahrzeugs, mit einem Fahrwerk und mit einer Griffstange, die mit dem Fahrbrett verbunden ist und über welche Mittel zum Steuern der Geschwindigkeit des Fahrzeugs relativ zum Untergrund bereitgestellt werden. Das Fahrwerk umfasst dabei zwei nebeneinander beabstandete, bei bestimmungsgemäßem Betrieb des Fahrzeugs in Fahrtrichtung vorne angeordnete Räder oder Kufen, welche mit dem Fahrbrett mechanisch gekoppelt sind, und wenigstens ein bei bestimmungsgemäßem Betrieb des Fahrzeugs in Fahrtrichtung hinten angeordnetes Antriebsrad, welches mit dem Fahrbrett mechanisch gekoppelt ist und über welches das Fahrzeug auf einem Untergrund antreibbar ist.

Mobilität ist eines der Schlüsselbedürfnisse der technisch orientieren Zivilisation. Es sind daher im Laufe der Zeit Fahrzeuge für verschiedene Einsatzszenarien entwickelt worden. Da sich für die verschiedene Einsatzszenarien allerdings teilweise recht unterschiedliche Anforderungen an den jeweils benötigten Fahrzeugtyp stellen, sind im Laufe der letzten Jahrzehnte bestehende Fahrzeugkonzepte immer weiter differenziert und auf das jeweilige Einsatzgebiet angepasst worden.

So hat sich für die persönliche Mobilität einerseits ein Sektor der allgemein als Personenkraftwagen (PKW) bekannten Fahrzeuge herausgebildet. Diese verfügen typischerweise über Platz für mehrere Personen, bieten einen guten Schutz der Insassen gegenüber Wetter und im Falle eines Unfalls und sind so motorisiert, dass damit Fernstrecken komfortabel, mühelos und in angemessener Zeit bewältigt werden können. Aufgrund der steigenden Anzahl von Fahrzeugen insbesondere dieses Fahrzeugstyps und einer damit einhergehenden Einengung des Verkehrsraums und Verknappung des Parkraums in Innenstädten bieten sich nicht nur Möglichkeiten für neue Fahrzeugtypen, sondern es bedarf auch eines durchgängigen Mobilitätskonzepts. Einer einzelnen Person ist nämlich wenig geholfen, wenn es für jeden Verkehrsraum ein optimal angepasstes Fahrzeug gibt, die Fahrzeugtypen sich aber nur schwer in den gewohnten Tagesablauf und in das vorherrschende Verkehrskonzept einbinden lassen.

Es sind daher eine Reihe von leichten Fahrzeugen entwickelt worden, die einerseits soweit alltagstauglich sind, dass sie einen Personenkraftwagen wenigstens für eine kürzere Strecke, z.B. zum Einkaufen in der Stadt, ersetzen können, andererseits aber so leicht sind, dass sie gegebenenfalls im Personenkraftwagen oder in anderen für längere Strecken ausgelegten Verkehrsmitteln als Gepäck selber mitgenommen werden können.

Die GB 2 290 508 A beschreibt einen leichten Scooter, der zusammengeklappt werden kann und der je nach Ausgestaltung durch Schwungholen und Abstoßen mit einem Bein oder optional von einer elektrisch wiederaufladbaren Batterie angetrieben werden kann.

Die EP 1 555 201 A1 beschreibt einen Elektroroller, bei dem der Akkumulator in Fahrtrichtung hinter dem Sitz im Heckbürzel angeordnet ist, sodass der Akkumulator in ästhetischer Weise schmutz- und wettergeschützt und vor unerlaubtem Zugriff gesichert am Elektroroller angeordnet und verkleidet werden kann.

Die DE 199 52 813 A1 beschreibt ein Kraftfahrzeug mit einem zu transportierenden Kleinfahrzeug, das über eine Halterung während des Transports im Kraftfahrzeug elektrisch aufgeladen werden kann.

Es ist die Aufgabe der vorliegenden Erfindung, ein Fahrzeug der eingangs genannten Art bereitzustellen, welches in beengten, insbesondere innerstädtischen Verkehrsräumen eingesetzt werden kann, sich leicht steuern lässt und gut in den bestehenden Individualverkehr einbinden lässt.

Diese Aufgabe wird durch ein Fahrzeug mit den Merkmalen des Anspruchs 1 gelöst. Vorteilhafte Aus- und Weiterbildungen ergeben sich aus den abhängigen Ansprüchen.

Das erfindungsgemäße Fahrzeug ist dadurch gekennzeichnet, dass das Fahrbrett entlang der Fahrzeuglängsachse in zwei Fahrbrettteile zweigeteilt ist und derart mit dem Fahrwerk gekoppelt ist, dass in Abhängigkeit von auf das Fahrbrett wirkenden Gewichtskräften der Lenkwinkel des Fahrzeugs regelbar ist. Hierdurch benötigt der Fahrer des Fahrzeugs die Hände nicht mehr zum Lenken des Fahrzeugs. Durch die Zweiteilung des Fahrbrettes wird zudem eine schnelle Umsetzung leichter Gewichtsverlagerungen ermöglicht, sodass der Fahrer insbesondere in beengtem Verkehrsraum schnell lenken kann.

Durch eine Veränderung der auf die zwei Fahrbrettteile wirkenden Gewichtskräfte entlang der Fahrzeugquerachse können sich die Fahrbretteile gegeneinander verbiegen oder tordieren und/oder relativ zum Untergrund geneigt werden, woraufhin der Lenkeinschlag der vorne angeordneten Räder oder Kufen verändert wird. Diese Neigetechnik erlaubt ein intuitives Lenken durch seitliche Gewichtsverlagerung, die dem Fahrer durch das Folgen seiner Bewegung eine Rückkopplung über seine gewollte Lenkaktion bereitstellt.

Bei dem erfindungsgemäßen Fahrzeug handelt es sich vorzugsweise um ein Straßenfahrzeug mit Rädern. In einer Ausführungsform können die Vorderräder jedoch durch Kufen ersetzt werden und somit einen Betrieb auf rutschigem Untergrund, z.B. Schnee, Eis oder Sand ermöglichen. In diesem Falle kann das in Fahrtrichtung hinten angeordnete Antriebsrad insbesondere mit Spikes bestückt sein, um eine erhöhte Reibung mit dem Untergrund und somit einen verbesserten Vortrieb erzeugen zu können.

Vorteilhafterweise sind die vorne angeordneten Räder oder Kufen einzeln und unabhängig von einander an dem Fahrbrett befestigt. Dies erlaubt eine einfache Konstruktion, ohne die beiden vorderen Räder oder Kufen mit einer gemeinsamen Lenkachse und/oder einem Lenkausgleichsdifferential ausstatten zu müssen.

In einer Ausführungsform der Erfindung ist vorgesehen, dass die vorne angeordneten Räder oder Kufen unterhalb des vorderen Endes je eines der Fahrbrettteile schwenkbar um je eine Schwenkachse gelagert sind, wobei die Schwenkachsen gegenüber dem Lot vom Ansatzpunkt der Schwenkachse an das jeweilige Fahrbrettteil bezüglich der Fahrtrichtung nach hinten geneigt sind. Hierdurch wird durch eine Gewichtsverlagerung eine seitliche Zwangskraft auf die Vorderräder/ Kufen ausgeübt, welches einen kostengünstigen Aufbau des Fahrzeugs und ein einfaches Lenken ermöglicht.

In einer Ausführungsform der Erfindung ist des Weiteren vorgesehen, dass die beiden Fahrbrettteile über eine bezüglich der Fahrtrichtung am hinteren Ende des Fahrzeugs angeordnete Gabelvorrichtung miteinander verbunden sind. Dadurch kann eine Verbindung der zwei Fahrbrettteile entlang der Fahrzeuglängsachse entfallen. Die Kopplung der zwei Fahrbrettteile erfolgt quasi nur an einer nahe dem Hinterrad abgestützten Stelle weit hinter dem Schwerpunkt in Längsrichtung. Diese weitgehende Entkopplung der linken und rechten Fahrzeughälfte ermöglicht, dass das Fahrzeug besonders schnell und präzise den Gewichtsverlagerungen des Fahrers folgt.

Die Griffstange kann vorteilhafterweise von unten nach oben verlaufend bezüglich der Fahrtrichtung nach vorne geneigt sein. Dies ermöglicht eine Standposition des Fahrers derart, dass er die Füße in Fahrtrichtung vor dem Verbindungspunkt der Griffstange an das Fahrbrett positionieren kann und die Griffstange zwischen den Beiden nach vorne verläuft. Dies gibt dem Fahrer einen sicheren Stand, weil er z.B. mit den Knien oder den Oberschenkeln die Fahrzeugmitte besser erfühlen kann und somit in möglichst unverkrampfter Haltung eine Geradeausfahrt durchführen kann.

Des Weiteren ermöglicht eine so ausgerichtete Griffstange, dass an der Griffstange ein Sitz angeordnet werden kann, der bezüglich der Fahrtrichtung hinter der Griffstange gelegen ist. Dies steigert den Fahrkomfort des Fahrers, indem es ihm gestattet, sich zumindest mit dem Gesäß abzustützen oder in übersichtlichen Verkehrssituationen in Geradeausfahrt sogar ganz hinzusetzen.

Der Sitz kann an der Griffstange beispielsweise mittels einer im Wesentlichen senkrecht nach oben führenden Sitzstange befestigt sein, die mit der Griffstange an einem weiter obenliegenden Punkt nochmals querverstrebt ist. An dieser Sitzstange kann des Weiteren auch eine nach hinten gerichtete Gepäckbefestigung vorgesehen sein, wobei ein dort positioniertes Gepäckstück den Schwerpunkt des Fahrzeugs in Längsachse weiterhin nach hinten nahe dem hinten angeordneten Antriebsrad verschiebt.

In einer Ausführungsform ist die Griffstange über die am hinteren Ende des Fahrzeugs angeordnete Gabelvorrichtung mit dem Fahrbrett verbunden. Hierdurch wird erreicht, dass die Schwerkraft des Fahrers am hinteren Ende des Fahrzeugs angreift, welches den Schwerpunkt in Längsrichtung weit nach hinten verlagert und somit zu einer noch wirksameren Lenkung durch die Füße des Fahrers auf den Fahrbrettteilen führt.

In einer bevorzugten Ausführungsform ist vorgesehen, dass die Fahrbretteile und/oder die Griffstange an der Gabelvorrichtung zusammenklappbar sind. Dazu sind an den Verbindungsstellen zwischen den Fahrbrettteilen bzw. der Griffstange mit der Gabelvorrichtung Drehgelenke vorgesehen, über deren Drehachsen die Fahrbrettteile und/oder die Griffstange so zueinander gedreht werden können, dass die flach aufeinanderliegen. Dies ermöglicht einen einfachen Transport des Fahrzeugs, z.B. im Kofferraum eines Personenkraftwagens und begünstigt somit die Einbindung des erfindungsgemäßen Fahrzeugs in ein durchgängiges Mobilitätskonzept, das auf den vorherrschenden Individualverkehr abgestimmt ist.

Das erfindungsgemäße Fahrzeug kann insbesondere als Elektrofahrzeug ausgestaltet sein, bei dem das in Fahrtrichtung hinten angeordnete Antriebsrad mit einem Elektromotor gekoppelt ist oder der Elektromotor in das Antriebsrad integriert ist und bei dem auf der Unterseite des Fahrbretts ein elektrischer Energiespeicher angeordnet ist, der mit dem Elektromotor elektrisch verbunden ist. Der elektrische Energiespeicher kann insbesondere als flache, in jedem der zwei Fahrbrettteile angeordnete wiederaufladbare Batterien ausgebildet sein, die Kontaktflächen aufweisen, über die die Batterien mit Gegenkontaktflächen im Personenkraftwagen verbindbar und aufladbar sind, wenn das erfindungsgemäße Fahrzeug dort verstaut wurde.

Die Erfindung wird nun anhand von Ausführungsbeispielen mit Bezug zu den Figuren näher erläutert.
- Figur 1: zeigt einen Elektroroller gemäß einem Ausführungsbeispiel der Erfindung,
- Figur 2: zeigt einen Elektroroller in bestimmungsgemäßem Betrieb gemäß einem Ausführungsbeispiel der Erfindung, bei welchem ein Sitz und eine Gepäckhalterung angebracht wurden,
- Figur 3A: zeigt den Elektroroller aus Figur 1 in einem teilzusammengeklappten Zustand,
- Figur 3B: zeigt den Elektroroller aus den Figuren 1 und 3A in ganz zusammengeklapptem Zustand,
- Figur 4: zeigt einen Elektroroller gemäß einem Ausführungsbeispiel der Erfindung in einer perspektivischen Ansicht schräg von unten,
- Figur 5: zeigt einen Detailausschnitt einer Drehgelenkgabel am hinteren Ende des Elektrorollers gemäß einem Ausführungsbeispiel der Erfindung und
- Figur 6: zeigt den Transport von erfindungsgemäßen Elektrorollern in Lademulden zum Wiederaufladen der Batterien im Kofferraum eines Personenkraftwagens.

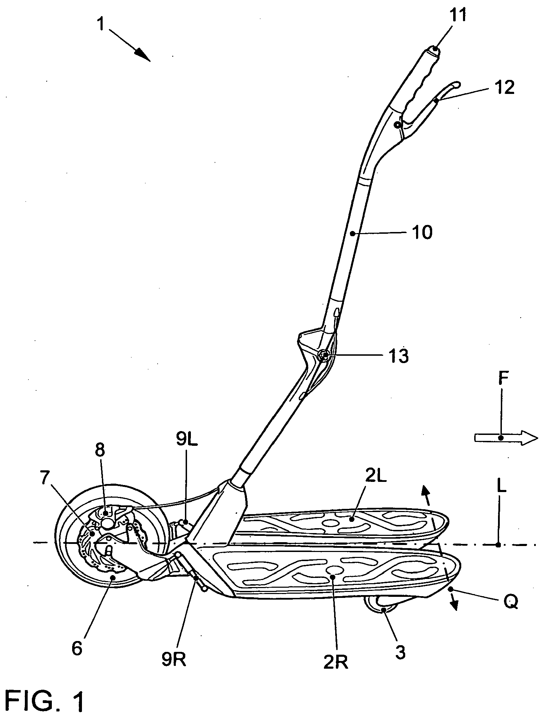

In der Figur 1 ist ein Elektroroller 1 gemäß einem Ausführungsbeispiel der Erfindung dargestellt. Der Elektroroller 1 ist vorzugsweise für die Beförderung eines Fahrers mit wenig Gepäck ausgelegt. Er ist z.B. ideal für innerstädtische Kurzstrecken, auf Firmengeländen, auf Flughäfen und im Freizeitbereich. Der Elektroroller 1 ist symmetrisch bezüglich der Längsachse L und umfasst ein linkes Fahrbrettteil 2L und ein rechtes Fahrbrettteil 2R, auf das der Fahrer jeweils seinen linken bzw. rechten Fuß abstellen kann. Die Fahrbrettteile 2L, 2R sind beidseitig entlang der Längsachse L des Elektrorollers 1 angeordnet und stehen nicht in direktem Kontakt miteinander. Vorne in Fahrtrichtung F ist unterhalb der beiden Fahrbrettteile 2L, 2R jeweils ein einzeln aufgehängtes Vorderrad 3 angeordnet.

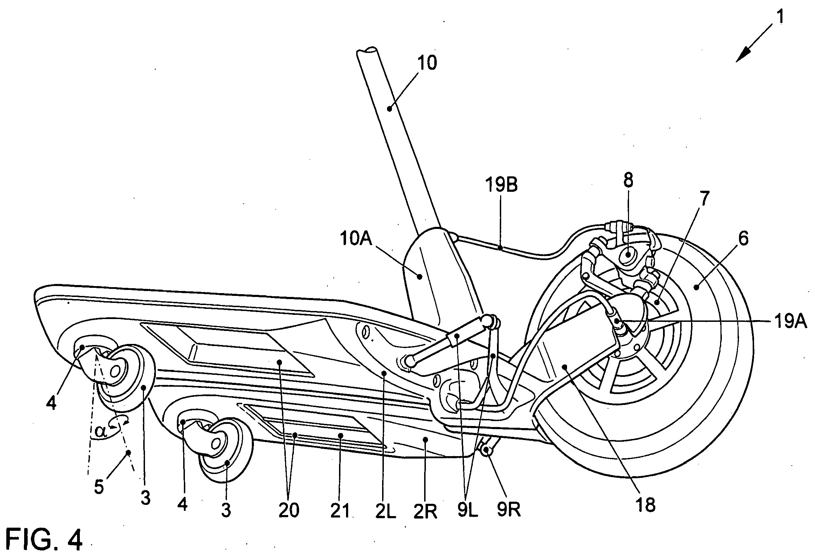

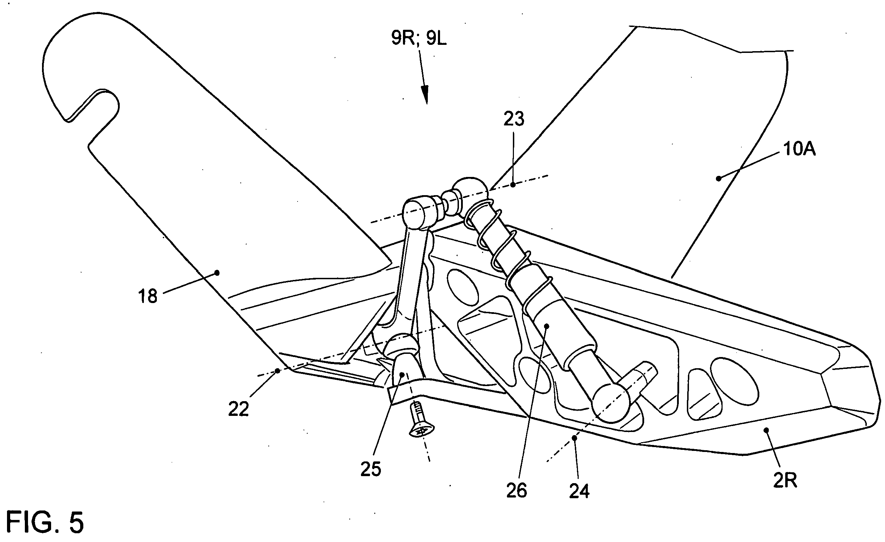

Am hinteren Ende des Elektrorollers 1 ist ein Antriebsrad 6 angeordnet, welches mit den Fahrbrettteilen 2L, 2R über je eine linke Drehgelenkgabel 9L und eine rechte Drehgelenkgabel 9R verbunden ist. Durch diese Verbindung der Drehgelenkgabeln 9L, 9R mit dem Antriebsrad 6 sind die beiden Fahrbrettteile 2L, 2R mechanisch miteinander gekoppelt. Bei einer Gewichtsverlagerung des Fahrers entlang der Fahrzeugquerachse Q verändert sich somit die Verteilung der Gewichtskraft auf die beiden Fahrbrettteile 2L, 2R, wodurch auf die einzeln aufgehängten Vorderräder 3 unterschiedliche Drehmomente erzeugt werden, welches zu einer Veränderung des Lenkwinkels führt, wie dies mit Bezug zu den Figuren 4 und 5 noch näher erläutert wird.

Das Antriebsrad 6 ist wesentlich größer als die Vorderräder 3 und es umfasst einen Elektronabenmotor 7 und eine Radbremse 8, über die der Elektroroller 1 angetrieben und abgebremst werden kann.

Der Elektroroller 1 umfasst eine Griffstange 10, die über die Drehgelenkgabeln 9L, 9R mit den Fahrbrettteilen 2L, 2R verbunden ist. Die Griffstange 10 ist vom hinteren Ende der Fahrbrettteile 2L, 2R nach oben verlaufend leicht nach vorne geneigt, sodass sich der Fahrer des Elektrorollers 1 in Fahrtrichtung F bequem hinter die Griffstange 10 auf den Fahrbrettteilen 2L, 2R positionieren kann.

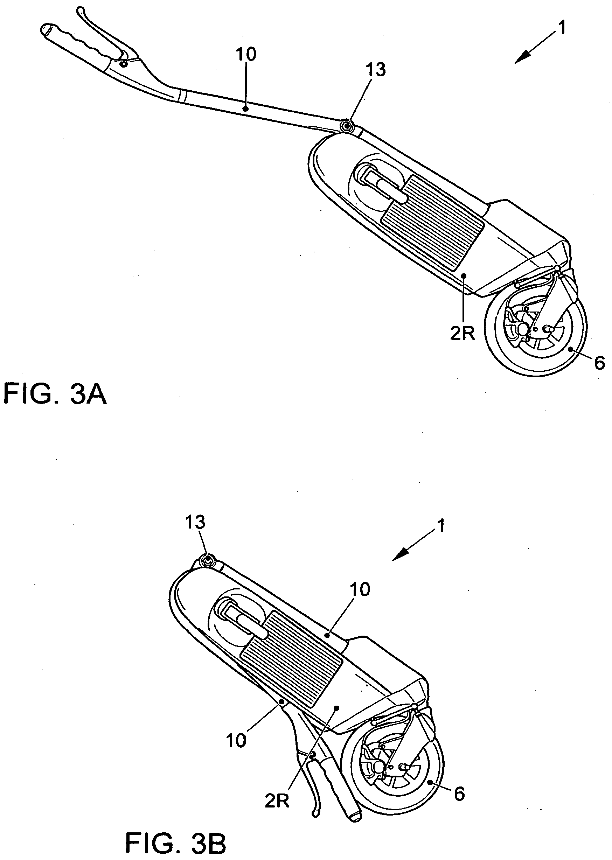

Die Griffstange 10 umfasst auf etwa halber Höhe ein Drehgelenk 13, über welches die Griffstange 10 zum Transport des Elektrorollers 1 zusammengeklappt werden kann, wie dies weiter unten anhand der Figuren 3A und 3B näher gezeigt wird.

An der Griffstange 10 ist oben ein Beschleunigungsgeber 11, z.B. als Knopf oder Tastschalter vorgesehen, über den der Fahrer des Elektrorollers 1 an den Elektronabenmotor 7 Regelsignale zum Beschleunigen senden kann. Etwas unterhalb des oberen Endes der Griffstange 10 ist ein Bremshebel 12 angeordnet, über den der Fahrer die Radbremse 8 betätigen kann. Beschleunigungsgeber 11 und Bremshebel 12 sind so angeordnet, dass sie durch Umgreifen der oberen Griffstange 10 mit einer Hand betätigt werden können. Beispielsweise kann der Handballen an der Griffstange 10 abgestützt werden, sodass der Beschleunigungsgeber 11 mit dem Daumen und der Bremshebel 12 mit den übrigen Fingern betätigbar ist.

In der zuvor beschriebenen Bauart kann ein Gesamtgewicht des Elektrorollers 1 von unter 10 kg erreicht werden. Durch die Zusammenklappbarkeit wird ein platzsparendes Verstauen im Kofferraum herkömmlicher Personenkraftwagen ermöglicht.

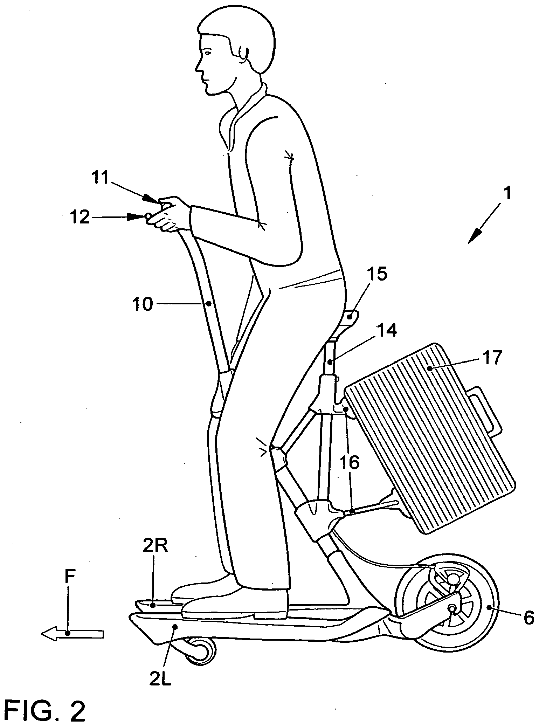

In der Figur 2 ist ein Elektroroller 1 in bestimmungsgemäßem Betrieb gemäß einem Ausführungsbeispiel der Erfindung dargestellt. Es kann sich insbesondere um den mit Bezug zu der Figur 1 dargestellten Elektroroller 1 handeln, bei welchem allerdings ein Sitz 15 und eine Gepäckhalterung 16 angebracht wurden. Die leicht nach vorne geneigte Griffstange 10 begünstigt dabei eine Montage des Sitzes 15 am oberen Ende einer im unteren Bereich der Griffstange 10 ansetzenden, vertikal ausgerichteten Sitzstange 14. Die Gepäckhalterung 16 greift ihrerseits an der Sitzstange 14 an und ist nach hinten gerichtet. Die Positionierung und Ausrichtung der Griffstange 10 erlaubt es, dass nach Gesichtspunkten des verfügbaren Freiraums als auch nach Gesichtspunkten der Ausbalancierung in Längsrichtung L die Gepäckhalterung selbst ein größeres Gepäckstück 17, z.B. einen Koffer tragen kann.

In der Figur 3A wurden die beiden Fahrbrettteile 2L, 2R mittels der Drehgelenkgabeln 9L, 9R zueinander verschwenkt, sodass die Trittflächen fast aufeinander zu liegen kommen. In einem weiteren Schritt kann die Griffstange 10 nun mittels des Drehgelenks 13 in den schmalen Zwischenraum zwischen den beiden Fahrbrettteilen 2L, 2R eingeklappt werden (siehe Figur 3B), wodurch ein leichter Transport des Elektrorollers 1 ermöglicht wird.

In der Figur 4 ist ein Elektroroller 1 gemäß einem Ausführungsbeispiel der Erfindung in einer perspektivischen Ansicht schräg von unten dargestellt. Der allgemeine Aufbau entspricht beispielsweise dem bereits in Bezug zu der Figur 1 beschriebenen Aufbau.

Die auf der Unterseite der Fahrbrettteile 2L, 2R angeordneten Vorderräder 3 sind über eine Drehvorrichtung 4 um 360° um jeweils eine Schwenkachse 5 schwenkbar. Die Schwenkachse 5 ist gegenüber dem Lot vom Ansatzpunkt an der Drehvorrichtung 4 um einen Winkel α nach hinten geneigt. Bei einer Gewichtsverlagerung des Fahrers entlang der Fahrzeugquerachse Q verändert sich nun die auf die zwei Fahrbrettteile 2L, 2R wirkenden Gewichtskräfte. Weil die beiden Fahrbrettteile 2L, 2R jedoch am vorderen Ende jeweils durch eines der Vorderräder 3 gestützt werden und nicht direkt mechanisch miteinander gekoppelt sind, verbiegen sie sich gegeneinander. Das mehr belastete Fahrbrettteil wird dabei am hinteren Ende nach unten und außen geneigt, woraufhin auf das betreffende Vorderrad 3 durch die nach hinten geneigte Aufhängung an der Schwenkachse 5 eine Zwangskraft erfährt, die es der Neigung nach außen folgen lässt. Für das andere Vorderrad tritt der gegenteilige Effekt ein, sodass es nach innen und somit in dieselbe Richtung lenkt.

Auf der Unterseite der Fahrbretteile 2L, 2R sind jeweils Batteriefächer 20 angeordnet, in die Batterien 21 eingesetzt werden können. Die Batterien sind durch elektrische Zuleitungen 19A mit dem Elektronabenmotor 7 im Antriebsrad 6 verbunden und versorgen diesen mit elektrischer Energie. Der tiefe Schwerpunkt der so angeordneten Batterien 21 sorgt für zusätzliche Fahrstabilität uns somit für ein sicheres Fortbewegen.

Die Steuerung der Energiezufuhr von den Batterien 21 zum Elektronamenmotor 7 erfolgt wie zuvor beschrieben über den Beschleunigungsgeber 11 über entsprechende in der Griffstange 10 geführten Leitungen (nicht dargestellt). An der Griffstange 10 ist des Weiteren eine Bremsleitung 19B befestigt, die den Bremshebel 12 mit der Radbremse 8 nach an sich bekannter Art verbindet.

Die Drehgelenkgabeln 9L, 9R sind in diesem Ausführungsbeispiel über eine Antriebsradgabel 18 mit dem Antriebsrad 6 sowie über einen Griffansatz 10A mit der Griffstange 10 verbunden. Eine Detailansicht der Drehgelenkgabeln 9L, 9R ist in der Figur 5 dargestellt. Sie umfassen drei Drehachsen 22 - 24, über die sowohl die Lenkfunktionalität durch Gewichtsverlagerung als auch die Funktionalität zum Zusammenklappen des Elektrorollers 1 bereitgestellt wird.

Die erste Drehachse 22 erlaubt ein Neigen der Fahrbrettteile 2L, 2R zur Fahrzeugquerachse. Die zweite Drehachse 23 erlaubt eine dazu senkrechte Nickbewegung. Durch eine Drückeinstellung 25 mit einem Gummi- oder Federpuffer wird eine Rückstellkraft bewirkt, die eine Rückführung der Fahrbrettteile 2L, 2R in die Ausgangslage zur Geradeausfahrt ermöglichen. Die dritte Drehachse 24 erlaubt schließlich, dass die Fahrbrettteile 2L, 2R zusammengeklappt werden können. Dazu kann eine Federhülse 26 vorgesehen sein, die die Drehachse 24 verriegelt und zur Freigabe der Drehachse 24 in Federrichtung verschoben werden kann.

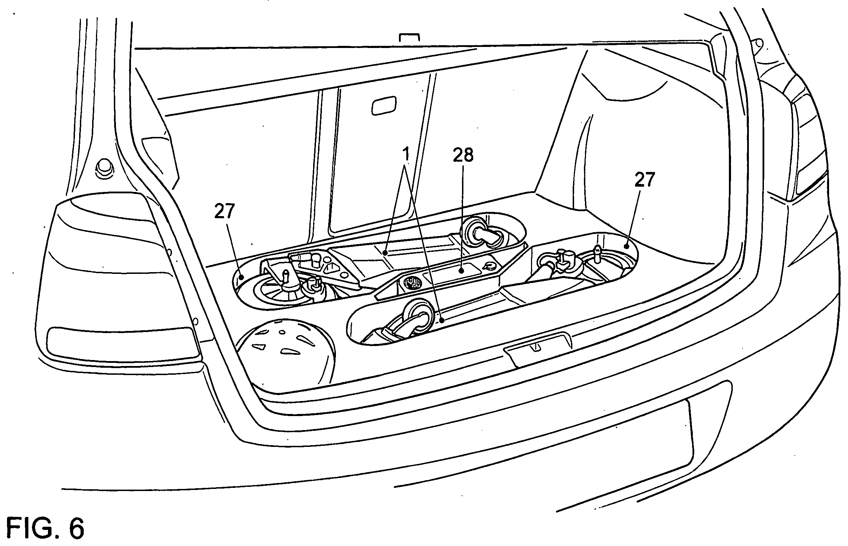

In der Figur 6 ist schließlich der Transport zweier erfindungsgemäßer Elektroroller 1 in Lademulden 27 zum Wiederaufladen der Batterien 21 im Kofferraum eines Personenkraftwagens dargestellt. Im Kofferraum ist dazu ein Ladegerät 28 vorgesehen, welches nicht nur die Steuerung des Aufladevorgangs, z.B. über die Fahrzeugbatterie oder einen elektrischen Generator des Personenkraftwagens, regelt, sondern auch über eine Ladezustandsanzeige verfügt, über die der Ladezustand der einzelnen Elektroroller 1 abgelesen werden kann.

Die Vorderräder 3 können auch durch Kufen ersetzt werden, wenn der Elektroroller 1 beispielsweise für den Betrieb auf Schnee, Eis oder Sand vorbereitet werden soll. Für diesen Zweck könnten die Vorderräder 3 lösbar mit den Fahrbrettteilen 2L, 2R verbunden sein, sodass diese gegebenenfalls durch Kufen ersetzt werden können (nicht dargestellt).

### Bezugszeichenliste

- 1: Elektroroller
- 2L: linkes Fahrbrettteil
- 2R: rechtes Fahrbrettteil
- 3: Vorderräder
- 4: Drehvorrichtungen
- 5: Schwenkachsen
- 6: Antriebsrad
- 7: Elektronabenmotor
- 8: Radbremse
- 9R: rechte Drehgelenkgabel
- 9L: linke Drehgelenkgabel
- 10: Griffstange
- 10A: Griffansatz
- 11: Beschleunigungsgeber
- 12: Bremshebel
- 13: Drehgelenk
- 14: Sitzstange
- 15: Sitz
- 16: Gepäckhalterung
- 17: Gepäckstück
- 18: Antriebsradgabel
- 19A: Elektrische Zuleitung
- 19B: Bremsleitung
- 20: Batteriefächer
- 21: Batterien
- 22: erste Drehachse der Drehgelenkgabel
- 23: zweite Drehachse der Drehgelenkgabel
- 24: dritte Drehachse der Drehgelenkgabel
- 25: Drückeinstellung
- 26: Federhülse
- 27: Lademulden
- 28: Ladegerät
- L: Fahrzeuglängsachse
- Q: Fahrzeugquerachse
- F: Fahrtrichtung

## Patentansprüche

1. Fahrzeug (1) umfassend
- ein Fahrbrett (2L, 2R) zum Abstellen wenigstens der Füße des Fahrers des Fahrzeugs (1),
- ein Fahrwerk (3, 6) mit
o zwei nebeneinander beabstandeten, bei bestimmungsgemäßem Betrieb des Fahrzeugs (1) in Fahrtrichtung (F) vorne angeordneten Rädern (3) oder Kufen, welche mit dem Fahrbrett (2L, 2R) mechanisch gekoppelt sind, und
o wenigstens einem bei bestimmungsgemäßem Betrieb des Fahrzeugs (1) in Fahrtrichtung (F) hinten angeordneten Antriebsrad (6), welches mit dem Fahrbrett (2L, 2R) mechanisch gekoppelt ist und über welches das Fahrzeug (1) auf einem Untergrund antreibbar ist, und
- eine Griffstange (10), die mit dem Fahrbrett (2L, 2R) verbunden ist und über welche Mittel (11, 12) zum Steuern der Geschwindigkeit des Fahrzeugs (1) relativ zum Untergrund bereitgestellt werden,
**dadurch gekennzeichnet,**
- **dass** das Fahrbrett (2L, 2R) entlang der Fahrzeuglängsachse (L) in zwei Fahrbrettteile (2L, 2R) geteilt ist und derart mit dem Fahrwerk (3, 6) gekoppelt ist, dass durch eine Veränderung der auf die zwei Fahrbrettteile (2L, 2R) wirkenden Gewichtskräften entlang der Fahrzeugquerachse (Q) sich die Fahrbrettteile (2L, 2R) gegeneinander verbiegen oder tordieren und/oder relativ zum Untergrund geneigt werden, wodurch der Lenkwinkel des Fahrzeugs (1) veränderbar ist.

2. Fahrzeug (1) nach Anspruch 1,
**dadurch gekennzeichnet,**
**dass** die vorne angeordneten Räder (3) oder Kufen einzeln und unabhängig von einander an dem Fahrbrett (2L, 2R) befestigt sind.

3. Fahrzeug (1) nach Anspruch 1 oder 2,
**dadurch gekennzeichnet,**
**dass** die vorne angeordneten Räder (3) oder Kufen unterhalb des vorderen Endes je eines der Fahrbrettteile (2L, 2R) schwenkbar um je eine Schwenkachse (5) gelagert sind, wobei die Schwenkachsen (5) gegenüber dem Lot vom Ansatzpunkt (4) der Schwenkachse (5) an das jeweilige Fahrbrettteil (2L, 2R) bezüglich der Fahrtrichtung (F) nach hinten geneigt sind.

4. Fahrzeug (1) nach einem der vorangegangenen Ansprüche,
**dadurch gekennzeichnet,**
**dass** die beiden Fahrbrettteile (2L, 2R) über eine am hinteren Ende des Fahrzeugs (1) angeordnete Gabelvorrichtung (9L, 9R) miteinander verbunden sind.

5. Fahrzeug (1) nach einem der vorangegangenen Ansprüche,
**dadurch gekennzeichnet,**
**dass** die Griffstange (10) von unten nach oben verlaufend bezüglich der Fahrtrichtung (F) nach vorne geneigt ist.

6. Fahrzeug (1) nach Anspruch 5,
**dadurch gekennzeichnet,**
**dass** an der Griffstange (10) ein Sitz (15) angeordnet ist, der bezüglich der Fahrtrichtung (F) hinter der Griffstange (10) gelegen ist.

7. Fahrzeug (1) nach einem der Ansprüche 5 oder 6,
**dadurch gekennzeichnet,**
**dass** die Griffstange (10) über die am hinteren Ende des Fahrzeugs (1) angeordnete Gabelvorrichtung (9L, 9R) mit dem Fahrbrett (2L, 2R) verbunden ist.

8. Fahrzeug (1) nach einem der Ansprüche 4 bis 7,
**dadurch gekennzeichnet,**
**dass** die Fahrbretteile (2L, 2R) und/oder die Griffstange (10) an der Gabelvorrichtung (9L, 9R) zusammenklappbar sind.

9. Fahrzeug (1) nach einem der vorangegangenen Ansprüche,
**dadurch gekennzeichnet, dass**
- das in Fahrtrichtung (F) hinten angeordnete Antriebsrad (6) mit einem Elektromotor (7) gekoppelt ist und
- auf der Unterseite des Fahrbretts (2L, 2R) ein elektrischer Energiespeicher (21) angeordnet ist, der mit dem Elektromotor (7) elektrisch verbunden ist.

## Claims

1. Vehicle (1) comprising
- a riding board (2L, 2R) for at least the feet of the driver of the vehicle (1) to be rested on,
- a chassis (3, 6) having
o two wheels (3) or sliders which are spaced apart from one another, arranged at the front in the direction of travel (F) during correct operation of the vehicle (1) and are mechanically coupled to the riding board (2L, 2R), and
o at least one driven wheel (6) which is arranged at the rear in the direction of travel (F) during correct operation of the vehicle (1), is mechanically coupled to the riding board (2L, 2R) and by means of which the vehicle (1) can be driven on an underlying surface, and
- a gripper rod (10) which is connected to the riding board (2L, 2R) and which can be used to make available means (11, 12) to control the speed of the vehicle (1) relative to the underlying surface,
**characterized in that**
- the riding board (2L, 2R) is divided along the longitudinal axis (L) of the vehicle into two riding board parts (2L, 2R), and is coupled to the chassis (3, 6) in such a way that by changing the weight forces acting on the two riding board parts (2L, 2R) along the transverse axis (Q) of the vehicle the riding board parts (2L, 2R) bend or twist with respect to one another and/or are inclined relative to the underlying surface, as a result of which the steering angle of the vehicle (1) can be changed.

2. Vehicle (1) according to Claim 1,
**characterized in that**
the wheels (3) or sliders which are arranged at the front are attached individually and independently of one another to the riding board (2L, 2R).

3. Vehicle (1) according to Claim 1 or 2,
**characterized in that**
the wheels (3) or sliders which are arranged at the front are mounted underneath the front end of each one of riding board parts (2L, 2R) in each case so as to be pivotable about one pivoting axis (5), wherein the pivoting axes (5) are inclined rearward with respect to the direction of travel (F) in relation to the perpendicular from the point (4) where the pivoting axis (5) meets the respective riding board part (2L, 2R).

4. Vehicle (1) according to one of the preceding claims,
**characterized in that**
the two riding board parts (2L, 2R) are connected to one another via a fork device (9L, 9R) which is arranged at the rear end of the vehicle (1).

5. Vehicle (1) according to one of the preceding claims,
**characterized in that**
the gripping rod (10) is inclined forward, running from bottom to top, with respect to the direction of travel (F).

6. Vehicle (1) according to Claim 5,
**characterized in that**
a seat (15) which is positioned behind the gripping rod (10) with respect to the direction of travel (F) is arranged on the gripping rod (10).

7. Vehicle (1) according to one of Claim 5 or 6,
**characterized in that**
the gripping rod (10) is connected to the riding board (2L, 2R) via the fork device (9L, 9R) which is arranged at the rear end of the vehicle (1).

8. Vehicle (1) according to one of Claims 4 to 7,
**characterized in that**
the riding board parts (2L, 2R) and/or the gripping rod (10) can be folded together on the fork device (9L, 9R).

9. Vehicle (1) according to one of the preceding claims,
**characterized in that**
- the driven wheel (6) which is arranged at the rear in the direction of travel (F) is coupled to an electric motor (7), and
- an electrical energy accumulator (21), which is electrically connected to the electric motor (7), is arranged on the underside of the riding board (2L, 2R).

## Revendications

1. Véhicule (1) comprenant :
- une planche de conduite (2L, 2R) destinée à placer au moins les pieds du conducteur du véhicule (1),
- un train de roulement (3, 6) comportant
o deux roues (3) ou patins disposés à l'avant dans la direction de conduite (F) et espacés l'un à côté de l'autre dans les conditions normales de fonctionnement du véhicule (1), qui sont mécaniquement couplés à la planche de conduite (2L, 2R), et
o au moins une roue d'entraînement (6) disposée à l'arrière dans la direction de conduite (F) dans les conditions normales de fonctionnement du véhicule (1), qui est mécaniquement couplée à la planche de conduite (2L, 2R) et par l'intermédiaire de laquelle le véhicule (1) peut être entraîné sur une surface sous-jacente, et
- un manche de préhension (10) qui est relié à la planche de conduite (2L, 2R) et par l'intermédiaire duquel des moyens (11, 12) sont prévus pour commander la vitesse du véhicule (1) par rapport à la surface sous-jacente,
**caractérisé en ce que**
- la planche de conduite (2L, 2R) est divisée en deux parties de planche de conduite (2L, 2R) le long de l'axe longitudinal (L) du véhicule et est couplée au train de roulement (3, 6) de manière à ce que les parties de planche de conduite (2L, 2R) se recourbent ou se tordent l'une contre l'autre ou s'inclinent par rapport à la surface sous-jacente par modification des forces pondérales agissant sur les deux parties de planche de conduite (2L, 2R) le long de l'axe transversal (Q) du véhicule, d'où il résulte que l'angle de braquage du véhicule (1) peut être modifié.

2. Véhicule (1) selon la revendication 1,
**caractérisé en ce que** les roues (3) ou les patins disposés à l'avant sont fixés individuellement et indépendamment les uns des autres à la planche de conduite (2L, 2R).

3. Véhicule (1) selon la revendication 1 ou 2,
**caractérisé en ce que** les roues (3) ou les patins disposés à l'avant sont placés en dessous de l'extrémité avant de l'une, respective, des parties de planche de conduite (2L, 2R) de façon à ce qu'ils puissent pivoter autour d'un axe de pivotement respectif (5),
dans lequel les axes de pivotement (5) sont inclinés vers l'arrière par rapport à la verticale au point de départ (4) de l'axe de pivotement (5) sur la partie de planche de conduite respective (2L, 2R) par rapport à la direction de conduite (F).

4. Véhicule (1) selon l'une quelconque des revendications précédentes,
**caractérisé en ce que** les deux parties de planche de conduite (2L, 2R) sont reliées l'une à l'autre par l'intermédiaire d'un dispositif à fourche (9L, 9R) disposé à l'extrémité arrière du véhicule (1).

5. Véhicule (1) selon l'une quelconque des revendications précédentes,
**caractérisé en ce que** le manche de préhension (10) est incliné vers l'avant en s'étendant du bas vers le haut par rapport à la direction de conduite (F).

6. Véhicule (1) selon la revendication 5,
**caractérisé en ce qu'**un siège (15) placé à l'arrière du manche de préhension (10) par rapport à la direction de conduite (F) est disposé sur le manche de préhension (10).

7. Véhicule (1) selon l'une quelconque des revendications 5 ou 6,
**caractérisé en ce que** le manche de préhension (10) est relié à la planche de conduite (2L, 2R) par l'intermédiaire du dispositif à fourche (9L, 9R) disposé à l'extrémité arrière du véhicule (1).

8. Véhicule (1) selon l'une quelconque des revendications 4 à 7,
**caractérisé en ce que** les parties de planche de conduite (2L, 2R) et/ou le manche de préhension (10) peuvent être repliés sur le dispositif à fourche (9L, 9R).

9. Véhicule (1) selon l'une quelconque des revendication précédentes, **caractérisé en ce que**
- la roue d'entraînement (6) disposée à l'arrière dans la direction de conduite (F) est couplée à un moteur électrique (7), et
- un dispositif de stockage d'énergie électrique (21) qui est électriquement relié au moteur électrique (7) est disposé sur la face inférieure de la planche de conduite (2L, 2R).
